# EUROPÄISCHE PATENTSCHRIFT

(11) **EP 0 288 808 B1**
(45) Veröffentlichungstag und Bekanntmachung des Hinweises auf die Patenterteilung: **15.11.1995**
(21) Anmeldenummer: 88105688.1
(22) Anmeldetag: 09.04.1988
(51) Int. Cl.: G02B 6/44

(54) **Endverschluss-Gehäuse für Signal-Übertragungskabel, insbesondere Glasfaserkabel**
Terminating box for signal transmission cables, in particular optical cables
Boîte de fermeture pour des câbles de transfert de signaux, en particulier pour câbles optiques

(30) Priorität: 28.04.1987 CH 1613/87
(43) Veröffentlichungstag der Anmeldung: 02.11.1988
(73) Patentinhaber: Reichle + De-Massari AG Elektro-Ingenieure, 8620 Wetzikon (CH)
(72) Erfinder: Reichle, Hans, CH-8620 Wetzikon (CH)
(74) Vertreter: Petschner, Goetz

(56) Entgegenhaltungen:
- EP-A- 216 073
- EP-A- 0 149 250
- DE-A- 3 428 615
- DE-A- 3 536 241
- DE-U- 8 109 413
- FR-A- 2 498 766

## Beschreibung

Die vorliegende Erfindung betrifft ein Endverschluss-Gehäuse mit
a) Mittel zur Aufnahme und Verbindung von Signal-Uebertragungs-Glasfaserkabeln;
b) mindestens zwei, lösbar miteinander verbundenen, flächig aufeinanderklappbaren schalenartigen Flach-Gehäuse-Teilen; und
c) Verbindungselementen, welche mindestens die Flach-Gehäuse-Teile miteinander scharnierartig verbinden.

Eine solche Anordnung ist bereits durch die EP-A-216073 bekanntgeworden, um in den Signal-Uebertragungsbereichen der Technik, wie Telefonie, On-Line-Systeme u. dgl. den Endverschluss von Glasfaserkabel für den Anschluss an die betreffenden Gerätschaften sicherzustellen.

Allerdings sind die hierfür mehrteiligen Gehäuse zwar gelenkig verbunden, aber nicht trennbar, womit eine sichere Handhabung der Kabel resp. deren Adern im Endverschlussbereich nicht gewährleistet ist, weshalb es Aufgabe der vorliegenden Erfindung ist, ein sogenanntes Endverschluss-Gehäuse für Signal-Uebertragungskabel, insbesondere Glasfaserkabel der vorgenannten Art zu schaffen, das eine universelle und freie Handhabung und Zugänglichkeit des Endverschluss-Gehäuses gewährleistet.

Dies wird erfindungsgemäss dadurch erreicht, dass
d) ein Zwischendeckel zwischen den Flach-Gehäuse-Teilen an einer freien Anschlagseite des einen Flach-Gehäuse-Teiles angeschlagen ist; und dass
e) die Verbindungselemente je zwei flächige, über ein Filmscharnier miteinander verbundene Flächenteile aus Kunststoff aufweisen, wobei jedes Flächenteil mindestens je einen Zapfen aufweist, der in einer entsprechenden Bohrung des zugehörigen Gehäuseteils sitzt und so eine lösbare Druckknopfverbindung bildet und wobei mindestens ein Flachteil im Bereich seiner Stirnkante eine mittige Aufwölbung aufweist, so dass eine Vertiefung zwischen Flächenteil und Gehäusewand, die als Ansetzpunkt für einen Schraubenzieher o. dgl. zum Aufbrechen der Druckknopfverbindung, dient.

Durch diese Massnahmen wird nun ein hochwirksames, sehr einfaches Verbindungselement an den Gehäuseteilen geschaffen, das funktionell sowohl als Scharnier als auch als Verschlussriegel für aufklappbare Gehäuse- und Deckelteile sowie als Verbindungselement von aufeinander gesetzten Gehäuseteilen verwendet werden kann.

Eine beispielsweise Ausführungsform des Erfindungsgegenstandes ist nachfolgend anhand der Zeichnung näher erläutert. Es zeigen:
- Fig. 1: in schaubildartiger Darstellung ein erfindungsgemässes Endverschluss-Gehäuse
und
- Fig. 2: schaubildartig ein Verbindungselement zur Verbindung der Gehäuse- und Deckelteile der Anordnung gemäss Fig. 1.

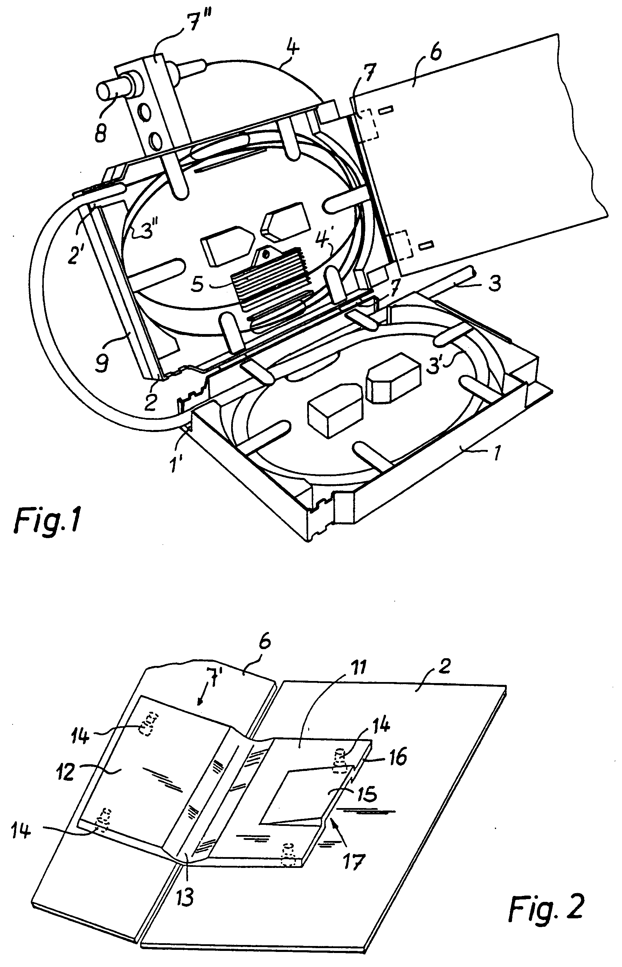

Das Endverschluss-Gehäuse gemäss Fig. 1 umfasst hier drei lösbar miteinander verbundene, Ebenen bildende Gehäuse-Teile 1, 2 und 9. In der Darstellung sichtbar sind hierbei die Gehäuse-Ebenen 1 und 2 an einer Längskante über Scharniermittel 7 verbunden.

Durch ähnliche oder gleiche Scharniermittel können die aufgeklappten Gehäuse-Ebenen in geschlossenem Zustand an der anderen Längskante verriegelt sein und ferner kann die dritte Gehäuse-Ebene 9 (und weitere) in ähnlicher oder gleicher Weise mit solchen Scharniermitteln mit der einen oder anderen Gehäuse-Ebene 1 oder 2 verbunden sein, wie das nachfolgend noch näher beschrieben ist.

Fig. 1 zeigt weiter im Einzelnen, dass der Innenraum der einen Gehäuse-Ebene 1 der Aufnahme einer Arbeitsreserve 3′ eines Uebertragungskabels 3 und der andere Innenraum der anderen Gehäuse-Ebene 2 der Aufnahme von Spleiss-Reserven 3˝ des genannten Uebertragungskabels 3 und von Spleiss-Reserven 4′ von Stecker-Anschlussadern 4 dient. Der Innenraum dieser Gehäuse-Ebene 2 dient als Spleissraum und umfasst hierfür mindestens eine geeignete Spleiss-Platte 5 und gegebenenfalls weitere Fixiermittel (nicht gezeigt) für die miteinander zu verbindenden Ader-Enden 4′ und 3˝.

Als Spleissraum kann aber auch eine weitere, zwischen den genannten Gehäuse-Ebenen 1 und 2 angeordnete Gehäuse-Ebene dienen.

Die vorgenannte obere Gehäuse-Ebene 9 hingegen dient in nicht näher gezeigter Weise als Stütz- und Befestigungsplatte und trägt hier eine Anschluss-Stecker-Leiste 7 mit einem Stecker 8, dessen Ader 4 in das Innere der anschliessenden Gehäuse-Ebene 2 geführt ist.

Geeignete Durchbrechungen 1′,2′ in den Gehäusewandungen lassen dabei ein Aus-, Ein- und Ueberführen der Kabelmittel an geeigneter Stelle zu.

Zum Schutze des Spleiss-Raumes ist weiter im Trennungsbereich der Gehäuse-Ebenen 1 und 2 ein Zwischendeckel angeordnet, der an einer freien Anschlagseite der einen Gehäuse-Ebene 2 mit dem Spleissraum über Scharniermittel 7 der vorgenannten Art angeschlagen ist.

Ansich können die Scharniermittel 7 von beliebiger Bauart sein.

Um aber die Gehäuse-Teile nicht nur scharnierartig zu verbinden, sondern auch beliebig und rasch voneinander trennen zu können, wird hier ein Verbindungselement 7′ verwendet, das sowohl als Scharnier als auch als Verschlussriegel für aufklappbare Gehäuse- und Deckelteile sowie als Verbindungssteg von aufeinander gesetzten Gehäuseteilen dient, wie Fig. 2 mehr im Einzelnen zeigt.

Dieses erfindungsgemässe Verbindungselement 7′ umfasst zwei Flächenteile 11 und 12, welche zur Anlage an den Seitenflächen der Gehäuse-Ebenen 1 und 2 bestimmt sind. Die beiden Flächenteile 11 und 12 sind filmscharnierartig 13 miteinander verbunden und das Ganze besteht aus einem geeigneten Kunststoff. Von den Flächenteilen 11 und 12 ragen auflageseitig hier je zwei Zapfen 14 ab, welche zusammen mit entsprechenden Gegenbohrungen in den Gehäuse-Ebenen 1 und 2 lösbare Druckknopfverbindungen bilden.

Damit wird es möglich, durch einfaches Andrücken solcher Verbindungselemente 7′ an die betreffenden Aussenwandungen von Gehäuseteilen letztere schnell und wirksam miteinander zu verbinden. Bei Anordnung von Verbindungselementen 7′ nur an einer Wandungsseite zweier Gehäuseteile sind dann diese als Scharnier wirksam.

Auf der Gegenseite könnte dann ein solches Verbindungselement als Verriegelungsmittel dienen.

Um hierfür die Druckknopfverbindung wenigstens des einen Flächenteiles 11 leicht aufbrechen zu können, weist dieser im Bereich seiner Stirnkante 16 eine mittige Aufwölbung 15 auf zur Bildung einer bodenseitigen Vertiefung 17 für die Aufnahme eines Schraubenziehers o. dgl., der dann beim Verkanten den Flächenteil 11 von der Gehäusewandung wegdrückt.

Natürlich können auch beide Flächenteile 11 und 12 mit solchen Aufwölbungen versehen sein.

Aus dem Vorbeschriebenen ergibt sich somit ein Endverschluss-Gehäuse für Signal-Uebertragungskabel, insbesondere Glasfaserkabel, das von grosser Universalität ist und eine umfassende Handhabung insbesondere in Bezug auf die Verbindung hochempfindlicher Leitermittel erlaubt.

## Patentansprüche

1. Abschluss-Gehäuse mit
a) Mittel zur Aufnahme und Verbindung von Signal-Uebertragungs-Glasfaserkabeln;
b) mindestens zwei, lösbar miteinander verbundenen, flächig auseinanderklappbaren schalenartigen Flach-Gehäuse-Teilen (1,2); und
c) Verbindungselementen (7′), welche mindestens die Flach-Gehäuse-Teile (1,2) miteinander scharnierartig verbinden, dadurch gekennzeichnet, dass
d) ein Zwischendeckel (6) zwischen den Flach-Gehäuse-Teilen (1,2) an einer freien Anschlagseite des einen Flach-Gehäuse-Teiles (2) angeschlagen ist; und dass
e) die Verbindungselemente (7′) je zwei flächige, über ein Filmscharnier (13) miteinander verbundene Flächenteile (11,12) aus Kunststoff aufweisen, wobei jedes Flächenteil (11,12) mindestens je einen Zapfen (14) aufweist, der in einer entsprechenden Bohrung des zugehörigen Ge-Gehäuseteils (11,12) sitzt und so eine lösbare Druckknopfverbindung bildet und wobei mindestens ein Flächenteil (11) im Bereich seiner Stirnkante (16) eine mittige Aufwölbung (15) aufweist, so dass eine Vertiefung (17) zwischen Flächenteil und Gehäusewand entsteht, die als Ansetzpunkt für einen Schraubenzieher o. dgl. zum Aufbrechen der Druckknopfverbindung, dient.

## Claims

1. A terminating box with
a) means for receiving and connecting optical cables for signal transmission;
b) at least two detachable, shell-like flat box sections (1, 2) which can be folded together; and
c) connection elements 7′ which connect at least the flat box sections (1, 2) as a type of hinge, characterized in that
d) an intermediate lid (6) is attached to a free side of one of the flat box sections (2) between the flat box sections (1, 2);
e) each of the connection elements (7′) are provided with two flat plastic sections (11, 12) which are connected by a film hinge (13), whereby each flat section (11, 12) is provided with at least one peg (14) which sits in a matching drilled hole in the respective box section (11, 12), thereby creating a detachable push-button connection, whereby at least one flat section (11) is provided with an arch (15) in the middle of its front edge (16) so that a depression (17) is created between the flat section and box wall which serves as a contact point for a screwdriver, etc. for breaking open the push-button connection.

## Revendications

1. Boîte de fermeture comportant
a) des moyens de réception et de connexion de câbles en fibres de verre de transmission de signaux ;
b) au moins deux parties de boîte plate (1, 2) en forme de coquilles reliées entre elles de manière amovible, pouvant être rabattues l'une sur l'autre à plat ; et
c) des éléments de liaison (7′) qui relient entre elles, à la manière d'une charnière, au moins les parties de boîte plate (1, 2), caractérisée en ce que
d) un couvercle intermédiaire (6) est fixé entre les parties de boîte plate (1, 2) sur un côté de butée libre d'une partie de boîte plate (2) ; et en ce que
e) les éléments de liaison (7′) comportent chacun deux parties de surface (11, 12) plates en matière plastique, reliées entre elles par une charnière en pellicule (13), chaque partie de surface (11, 12) comportant au moins un tenon (14) qui est logé dans un alésage correspondant de la partie de boîte (11, 12) correspondante et forme ainsi un assemblage par bouton-pression amovible et une partie de surface (11) au moins présentant, dans la zone de son bord frontal (16), un bombement (15) central, de sorte qu'il se forme un creux (17) entre la partie de surface et la paroi de la boîte, qui sert de point d'appui à un tournevis ou similaire pour ouvrir l'assemblage par bouton-pression.
